Europäisches Patentamt

European Patent Office

Office européen des brevets

(19)

(11) Veröffentlichungsnummer: **0 262 309**
**B1**

(12) **EUROPÄISCHE PATENTSCHRIFT**

(45) Veröffentlichungstag der Patentschrift:
**31.01.90**

(51) Int. Cl.⁴: **G01B 13/10**

(21) Anmeldenummer: **87109384.5**

(22) Anmeldetag: **30.06.87**

(54) **Pneumatischer Messdorn.**

(30) Priorität: **03.10.86 DE 3633704**

(43) Veröffentlichungstag der Anmeldung:
**06.04.88 Patentblatt 88/14**

(45) Bekanntmachung des Hinweises auf die Patenterteilung:
**31.01.90 Patentblatt 90/5**

(84) Benannte Vertragsstaaten:
**AT BE CH DE ES FR GB GR IT LI NL SE**

(56) Entgegenhaltungen:
**DE-A- 2 504 169**
**US-A- 2 306 469**
**US-A- 3 577 642**

(73) Patentinhaber: **Rudolf NIEBERDING GmbH,
J.-Liebig-Strasse 6, D-4044 Kaarst 2(DE)**

(72) Erfinder: **Nieberding, Karl R., J.-Liebig-Strasse 6,
D-4044 Kaarst 2(DE)**

(74) Vertreter: **Patentanwaltsbüro Cohausz & Florack,
Postfach 14 01 20 Schumannstrasse 97,
D-4000 Düsseldorf 1(DE)**

## Beschreibung

Die Erfindung betrifft einen pneumatischen Meßdorn mit mindesten zwei radialen verschieblichen Meßstiften, deren äußere als Ventil wirkende Enden an der Innenwandung der zu messenden Ausnehmung, insbesondere der Bohrung zur Anlage gelangt, um in dieser Stellung die Durchflußmenge der Meßluft zu bestimmen.

Ein solcher Meßdorn ist aus der deutschen Offenlegungsschrift 25 04 169 bekannt. Dieser bekannte Meßdorn läßt es zu, daß stufenförmig sich verjüngende Bohrungen gemessen werden, wenn die Durchmesser der Bohrung von außen nach innen geringer werden. In diesem Fall ist der Meßdorn entsprechend stufenförmig gestaltet. Dagegen ist es nicht möglich, stufenförmige Erweiterungen zu messen, wenn äußere Bereiche der Bohrung einen geringeren Durchmesser aufweisen als innere. Damit sind Rücksprünge und Ringnuten nicht meßbar.

Aufgabe der Erfindung ist es, einen Meßdorn der eingangs genannten Art zu schaffen, der ein Messen von Ringnuten und Rücksprüngen erlaubt, die nach außen hin engere Durchmesser besitzen.

Diese Aufgabe wird erfindungsgemäß dadurch gelöst, daß jeder Meßstift das Stellglied eines separaten Ventiles bildet, daß jedes Ventil eine vom Meßstift gesteuerte Durchströmöffnung aufweist und daß die Meßstifte mit ihrer Steuerkante die Durchströmöffnung erst im ausgefahrenen Zustand erreichen.

Die Meßstifte dieses Meßdorns können weit über den Außenumfang des Meßdorns pneumatisch herausgefahren werden, um dann bei Anlage an der zu messenden Innenwandung mit einer inneren Kante eine Durchströmöffnung zu erreichen und hierdurch die Durchflußmenge der Meßluft exakt zu steuern, so daß das Maß exakt angegeben werden kann. Hierbei ist die Bauweise des Meßdorns äußerst einfach, und es wird eine hohe Maßgenauigkeit bei optimaler Schmutzunanfälligkeit erreicht.

Besonders vorteilhaft ist es hierbei, wenn in der die Meßstifte aufnehmenden Querbohrung für jeden Meßstift ein Meßluftkanal mündet, dessen Mündungsöffnung vom inneren Ende des Meßstiftes in seiner ausgefahrenen Lage überfahrbar ist. Alternativ kann aber auch in der die Meßstifte aufnehmenden Querbohrung für jeden Meßstift ein Meßluftkanal münden, dessen Mündungsöffnung von einer Querbohrung im Meßstift in seiner ausgefahrenen Lage überfahrbar ist.

Ein Ausführungsbeispiel der Erfindung ist in der Zeichnung dargestellt und wird im folgenden näher beschrieben. Es zeigen:

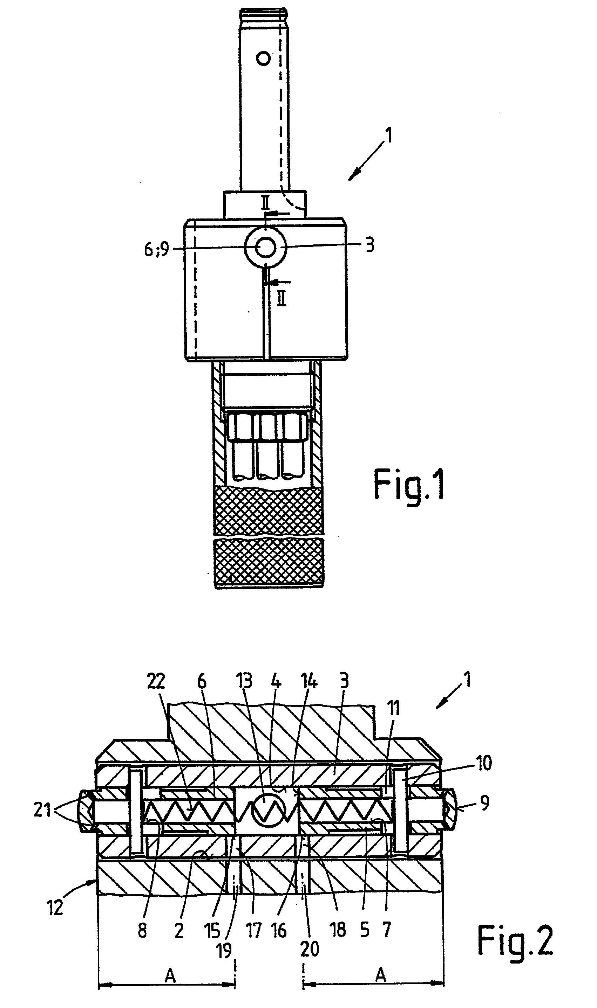

Fig. 1 eine Seitenansicht des Meßdorns und
FAig. 2 einen Schnitt nach II-II in Figur 1.

Der Meßdorn 1 weist eine diametrale Querbohrung 2 auf, in der eine rohrförmige Meßpatrone 3 einliegt, deren Länge und Durchmesser der Länge und Durchmesser der Querbohrung in etwa entspricht. In der mittigen koaxialen Innenbohrung 4 der Patrone 3 liegen zwei radiale bolzenförmige Meßstifte 5, 6 ein, deren Außendurchmesser nur wenig geringer ist als der Durchmesser der Innenbohrung 4 und die jeweils eine koaxiale Sackbohrung 7, 8 aufweisen, die jeweils zur Innenseite hin mündet, so daß die äußeren Enden der Meßstifte 5, 6 geschlossen sind und gewölbte Anlageflächen 9 für den zu messenden Innendurchmesser bilden.

Beide Meßstifte 5, 6 sind von Stiften 10 quer durchdrungen, die in Längsschlitzen 11 der Meßstiftwandungen einliegen und in radialen Bohrungen der Meßpatrone gehalten sind. Die Länge der Schlitze 11 bestimmt den Weg, um den die Meßstifte nach außen über den Außenmantel 12 des Meßdorns 1 fahrbar sind.

Um die beiden Meßstifte radial nach außen fahren zu können, wird über eine in die Innenbohrung 4 mittig mündende Leitung 13 Druckluft zwischen die Innenenden der Meßstifte 5, 6 eingegeben. Dieser pneumatische Druck wird so hoch gewählt, daß nach dem Einstecken des Meßdorns in die zu messende Bohrung die Meßstifte mit Sicherheit nach außen gegen die zu messende Wandung gedrückt werden. In dieser herausgefahrenen Meßstellung erreichen die hinteren Enden 14 der Meßstifte Öffnungen 15, 16 in der Innenwand der Bohrung 4, die von radialen Kanälen 17, 18 in der Meßpatrone gebildet werden. Diese Kanäle 17, 18 stehen in Verbindung mit Kanälen 19, 20 im Meßdorn und führen zu Meßeinrichtungen, die den Druck in diesen Kanälen angeben. Hierbei wird der Bewegung der Meßstifte 5, 6 in ihren äußeren Stellungen meist ein geringerer Druck, d.h. der eigentliche Meßdruck verwendet.

Der Abstand A der Öffnungen 15, 16 bzw. der Kanäle 17, 18 zum Mantel 12 ist damit geringer als die Länge der Meßstife 5, 6, so daß im eingefahrenen Zustand der Meßstifte diese die Öffnungen 15, 16 mit ihren Außenmänteln voll verschließen und in der herausgefahrenen Stellung die Enden 14 die Öffnungen teilweise überdecken und damit an diesen Stellen Ventile bilden, die die exakte Lage der Meßstifte 5, 6 in der Meßstellung und damit den genauen Durchmesser der zu messenden Bohrung angeben.

Alternativ können die Öffnungen 15, 16 statt durch die inneren stirnseitigen Enden 14 auch durch seitliche Öffnung insbesondere radiale Querbohrungen der Meßstifte 5, 6 überfahren werden und hierbei die durch die Kanäle 17, 18 ausströmende Meßluft bestimmen.

Seitlich der Anlageflächen 9 befinden sich in den äußeren Köpfen der Meßstifte 5, 6 seitliche Bohrungen 21, durch die ein Teil der Luft ausströmt um die zu messende Innenwandung sauber zu halten. Ferner kann eine Feder 22 in den Bohrungen 7, 8 einliegen, die entweder als Schraubendruckfeder die Meßstifte 5, 6 zusätzlich nach außen drückt oder aber die als Zugfeder die Meßstifte nach innen zieht, so daß der pneumatische Ausfahrdruck diese Feder überwinden muß.

## Patentansprüche

1. Pneumatischer Meßdorn mit mindestens zwei radialen verschieblichen Meßstiften, deren äußere

2

als Ventil wirkende Enden an der Innenwandung der zu messenden Ausnehmung, insbesondere der Bohrung zur Anlage gelangt, um in dieser Stellung die Durchflußmenge der Meßluft zu bestimmen,
**dadurch gekennzeichnet,** daß jeder Meßstift (5, 6) das Stellglied eines separaten Ventiles (14, 15, 16) bildet, daß jedes Ventil eine vom Meßstift gesteuerte Durchströmöffnung (15, 16) aufweist und daß die Meßstifte (5, 6) mit ihrer Steuerkante (14) die Durchströmöffnung (15, 16) erst im ausgefahrenen Zustand erreichen.

2. Meßdorn nach Anspruch 1,
**dadurch gekennzeichnet,** daß in der die Meßstifte (5, 6) aufnehmenden Querbohrung (4) für jeden Meßstift ein Meßluftkanal (17, 18) mündet, dessen Mündungsöffnung (15, 16) vom inneren Ende (14) des Meßstiftes (5, 6) in seiner ausgefahrenen Lage überfahrbar ist.

3. Meßdorn nach Anspruch 1,
**dadurch gekennzeichnet,** daß in der die Meßstifte (5, 6) aufnehmenden Querbohrung (4) für jeden Meßstift ein Meßluftkanal (17, 18) mündet, dessen Mündungsöffnung (15, 16) von einer Querbohrung im Meßstift (5, 6) in seiner ausgefahrenen Lage überfahrbar ist.

4. Meßdorn nach einem der vorherigen Ansprüche,
**dadurch gekennzeichnet,** daß beide Meßstifte (5, 6) in einer diametralen Patrone (3) koaxial verschieblich einliegen.

## Claims

1. A pneumatic plug gauge having at least two radial displaceable measuring pins whose outer ends bear against the inner wall of the recess, more particularly the bore to be measured, in order to determine the rate of flow of the measuring air, characterized in that each measuring pin (5, 6) forms the control member of a separate valve (14, 15, 16), each valve has a flow aperture (15, 16) controlled by the measuring pin, and the measuring pins (5, 6) reach the flow aperture (15, 16) by their control edges (14) only in the extended state.

2. A plug gauge according to claim 1, characterized in that for each measuring pin there discharges in the transverse bore (4) receiving the measuring pins (5, 6) a measuring air duct (17, 18) whose mouth aperture (15, 16) can be passed over by the inner end (14) of the measuring pin (5, 6) in its extended position.

3. A plug gauge according to claim 1, characterized in that for each measuring pin there discharges in the transverse bore (4) receiving the measuring pins (5, 6) a measuring air duct (17, 18) whose mouth aperture (15, 16) can be passed over by a transverse bore in the measuring pin (5, 6) in its extended position.

4. A plug gauge according to one of the preceding claims, characterized in that both measuring pins (5, 6) lie coaxially displaceable in a diametric cartridge (3).

## Revendications

1. Tampon à limites pneumatique avec au moins deux tiges de mesurage radiales coulissantes dont l'extrémité extérieure vient en appui sur la paroi intérieure de l'évidement à mesurer, en particulier de l'alésage, pour déterminer dans cette position le débit de passage de l'air de mesurage, caractérisé en ce que chaque tige de mesurage (5, 6) forme l'organe final d'une valve (14, 15, 16) séparée, que chaque valve présente une ouverture de passage (15, 16) commandée par la tige de mesurage, et que les tiges de mesurage (5, 6) atteignent l'ouverture de passage (15, 16) par leur bord de commande (14) seulement en position de sortie.

2. Tampon à limites selon la revendication 1, caractérisé en ce que, dans l'alésage transversal (4) recevant les tiges de mesurage (5, 6), débouche pour chaque tige de mesurage un canal d'air de mesurage (17, 18) dont l'ouverture de débouché (15, 16) peut être traversée par l'extrémité intérieure (14) de la tige de mesurage (5, 6) dans sa position de sortie.

3. Tampon à limites selon la revendication 1, caractérisé en ce que, dans l'alésage transversal (4) recevant les tiges de mesurage (5, 6), débouche pour chaque tige de mesurage un canal d'air de mesurage (17, 18) dont l'ouverture de débouché (15, 16) peut être traversée par un alésage transversal dans la tige de mesurage (5, 6) dans sa position de sortie.

4. Tampon à limites selon l'une des revendications précédentes, caractérisé en ce que les deux tiges de mesurage (5, 6) sont logées à coulissement coaxial dans un chargeur radial (3).

Fig.1

Fig.2